# EUROPEAN PATENT APPLICATION

(11) **EP 4 447 528 A1**
(43) Date of publication of application: **16.10.2024**
(21) Application number: 22909992.4
(22) Date of filing: 20.12.2022
(51) Int. Cl.: H04W 24/04

(54) **FAULT DETECTION METHOD, SIGNAL PROCESSING APPARATUS, AND CONTROL APPARATUS**

(30) Priority: 22.12.2021 CN 202111583925
(71) Applicant: Huawei Technologies Co., Ltd., Shenzhen, Guangdong 518129 (CN)
(72) Inventor: MA, Ning, Shenzhen, Guangdong 518129 (CN)
(74) Representative: Epping - Hermann - Fischer
(86) International application number: PCT/CN2022/140306
(87) International publication number: WO 2023/116680

(57) **Abstract**

This application provides a fault detection method, a signal processing apparatus, and a control apparatus, to improve system maintenance efficiency. The method includes: A signal processing apparatus obtains alarm information after initialization, where the alarm information indicates that an alarm exists on the signal processing apparatus before the initialization. The signal processing apparatus performs fault detection based on the alarm information.

## Description

This application claims priority to Chinese Patent Application No. 202111583925.X, filed with the China National Intellectual Property Administration on December 22, 2021 and entitled "FAULT DETECTION METHOD, SIGNAL PROCESSING APPARATUS, AND CONTROL APPARATUS", which is incorporated herein by reference in its entirety.

### TECHNICAL FIELD

This application relates to the field of communication technologies, and more specifically, to a fault detection method, a signal processing apparatus, and a control apparatus.

### BACKGROUND

When a fault occurs on a communication module in a communication system, the communication module may report an alarm for the fault. If an alarm still exists on the communication module when the communication module is powered off or in sleep, the alarm is cleared due to the power-off or sleep when the communication module is powered on or woken up again. However, the fault existing when the communication module is powered off or in sleep may not be recovered. After the alarm is cleared, no alarm exists on the communication module when the communication module is powered on or woken up again. Therefore, the communication system may mistakenly consider that no fault exists on the communication module, and further needs to spend a long period of time in re-identifying, through fault detection, the fault existing before the power-off or sleep. Consequently, system maintenance efficiency is low. For example, a standing wave alarm exists on a radio frequency module of a base station when the radio frequency module is in sleep. After the radio frequency module is woken up again, the standing wave alarm on the radio frequency module does not exist. Therefore, the base station mistakenly considers that no fault exists on the radio frequency module, and cannot rectify a fault in time.

Therefore, a fault detection method, a signal processing apparatus, and a control apparatus are urgently needed to improve system maintenance efficiency.

### SUMMARY

This application provides a fault detection method, a signal processing apparatus, and a control apparatus, to improve maintenance efficiency of a base station.

According to a first aspect, a fault detection method is provided. The method may be executed by a signal processing apparatus or a chip in the signal processing apparatus. The method includes: A signal processing apparatus obtains alarm information after initialization, where the alarm information indicates that an alarm exists on the signal processing apparatus before the initialization. The signal processing apparatus performs fault detection based on the alarm information.

In this way, in this application, when the signal processing apparatus completes the initialization, the signal processing apparatus may obtain the alarm information, learn, based on the alarm information, that the alarm exists on the signal processing apparatus before the initialization, and perform the fault detection based on the alarm information, so that system maintenance efficiency is improved.

With reference to the first aspect, in some implementations of the first aspect, that a signal processing apparatus obtains alarm information includes: The signal processing apparatus receives the alarm information from a control apparatus.

In this way, in this application, the signal processing apparatus may receive the alarm information from the control apparatus. In other words, the control apparatus stores the alarm of the signal processing apparatus. This saves storage capacity of the signal processing apparatus.

With reference to the first aspect, in some implementations of the first aspect, the method further includes: The signal processing apparatus sends a request message to the control apparatus, where the request message is used to request to obtain the alarm information.

In this way, in this application, the control apparatus may request to obtain the alarm information from the signal processing apparatus. This improves system detection flexibility.

With reference to the first aspect, in some implementations of the first aspect, the method further includes: The signal processing apparatus stores the alarm existing on the signal processing apparatus before the initialization. The signal processing apparatus determines the alarm information based on the alarm existing before the initialization.

In this way, in this application, the signal processing apparatus may store the alarm existing on the signal processing apparatus before the initialization, to detect a possible fault in time. This further improves the system maintenance efficiency.

With reference to the first aspect, in some implementations of the first aspect, that the signal processing apparatus performs fault detection based on the alarm information includes: The signal processing apparatus accelerates the fault detection based on the alarm information.

In this way, in this application, when the alarm exists on the signal processing apparatus before the initialization, the signal processing apparatus may accelerate the fault detection. This may further improve the system maintenance efficiency.

With reference to the first aspect, in some implementations of the first aspect, the alarm information indicates an alarm type, and the fault detection corresponds to the alarm type.

In this way, in this application, the signal processing apparatus may perform the fault detection in different manners based on different alarm types. This may further improve the system maintenance efficiency.

With reference to the first aspect, in some implementations of the first aspect, the alarm type includes at least one of the following types: a type of a fault subject, a type of a fault, a type of a fault level, and a type of network management.

With reference to the first aspect, in some implementations of the first aspect, that the signal processing apparatus performs fault detection based on the alarm information includes: The signal processing apparatus determines a first parameter based on the alarm information. The signal processing apparatus performs the fault detection by using the first parameter, where the first parameter includes at least one of the following parameters: a detection periodicity and a quantity of detection and confirmation times.

In this way, in this application, the signal processing apparatus may determine, based on the alarm information, the first parameter used for the fault detection, so that system maintenance reliability can be improved.

With reference to the first aspect, in some implementations of the first aspect, the first parameter is used to accelerate the fault detection.

In this way, in this application, the signal processing apparatus may use the first parameter that can accelerate the fault detection. This further improves the system maintenance efficiency.

With reference to the first aspect, in some implementations of the first aspect, the method further includes: The signal processing apparatus receives environment information from the control apparatus. That the signal processing apparatus determines a first parameter based on the alarm information includes: The signal processing apparatus determines the first parameter based on the alarm information and the environment information, where the environment information includes at least one of the following information: path quality information, power information, and loss information.

In this way, in this application, the signal processing apparatus may receive the environment information that can assist the detection. This further improves the system maintenance reliability. With reference to the first aspect, in some implementations of the first aspect, the method further includes: The signal processing apparatus receives the first parameter from the control apparatus. The signal processing apparatus performs the fault detection by using the first parameter.

In this way, in this application, the signal processing apparatus may obtain, from the control apparatus, the parameter used for the fault detection. This improves the system maintenance efficiency.

With reference to the first aspect, in some implementations of the first aspect, the signal processing apparatus is a remote radio unit RU, and the control apparatus is a baseband unit BU. Alternatively, the signal processing apparatus is an RU, and the control apparatus is a baseband processing apparatus MPT. Alternatively, the signal processing apparatus is a baseband processing apparatus BBP, and the control apparatus is an MPT.

According to a second aspect, a fault detection method is provided. The method may be executed by a control apparatus or a chip in the control apparatus. The method includes: A control apparatus generates alarm information, where the alarm information indicates that an alarm exists on a signal processing apparatus before initialization, and the alarm information is used by the signal processing apparatus to perform fault detection. The control apparatus sends the alarm information to the signal processing apparatus.

In this way, in this application, when the signal processing apparatus completes the initialization, the signal processing apparatus may obtain the alarm information, learn, based on the alarm information, that the alarm exists on the signal processing apparatus before the initialization, and perform the fault detection based on the alarm information, so that system maintenance efficiency is improved.

With reference to the second aspect, in some implementations of the second aspect, the method further includes: The control apparatus receives a request message from the signal processing apparatus, where the request message is used to request to obtain the alarm information.

With reference to the second aspect, in some implementations of the second aspect, the alarm information is used by the signal processing apparatus to accelerate the fault detection.

With reference to the second aspect, in some implementations of the second aspect, the alarm information indicates an alarm type, and the fault detection corresponds to the alarm type.

With reference to the second aspect, in some implementations of the second aspect, the alarm type includes at least one of the following types: a type of a fault subject, a type of a fault, a type of a fault level, and a type of network management.

With reference to the second aspect, in some implementations of the second aspect, the alarm information is further used to determine a first parameter, and the first parameter includes at least one of the following parameters: a detection periodicity and a quantity of detection and confirmation times.

With reference to the second aspect, in some implementations of the second aspect, the first parameter is used to accelerate the fault detection.

With reference to the second aspect, in some implementations of the second aspect, the method further includes: The control apparatus sends environment information to the signal processing apparatus, where the environment information is used to determine the first parameter, and the environment information includes at least one of the following information: path quality information, power information, and loss information.

With reference to the second aspect, in some implementations of the second aspect, the method further includes: The control apparatus sends the first parameter to the signal processing apparatus, where the first parameter is used to perform the fault detection.

With reference to the second aspect, in some implementations of the second aspect, the signal processing apparatus is a remote radio unit RU, and the control apparatus is a baseband unit BU. Alternatively, the signal processing apparatus is an RU, and the control apparatus is a baseband processing apparatus MPT. Alternatively, the signal processing apparatus is a baseband processing apparatus BBP, and the control apparatus is an MPT.

According to a third aspect, a signal processing apparatus is provided. The signal processing apparatus includes an obtaining unit and a processing unit. The obtaining unit is configured to obtain alarm information, where the alarm information indicates that an alarm exists on the signal processing apparatus before initialization. The processing unit is configured to perform fault detection based on the alarm information.

In this way, in this application, when the signal processing apparatus completes the initialization, the signal processing apparatus may obtain the alarm information, learn, based on the alarm information, that the alarm exists on the signal processing apparatus before the initialization, and perform the fault detection based on the alarm information, so that system maintenance efficiency is improved.

With reference to the third aspect, in some implementations of the third aspect, the obtaining unit is specifically configured to send a request message to a control apparatus, where the request message is used to request to obtain the alarm information.

With reference to the third aspect, in some implementations of the third aspect, the signal processing apparatus further includes a storage unit. The storage unit is configured to store the alarm existing on the signal processing apparatus before the initialization. The processing unit is further configured to determine the alarm information based on the alarm existing before the initialization.

With reference to the third aspect, in some implementations of the third aspect, the processing unit is specifically configured to accelerate the fault detection based on the alarm information.

With reference to the third aspect, in some implementations of the third aspect, the alarm information indicates an alarm type, and the fault detection corresponds to the alarm type.

With reference to the third aspect, in some implementations of the third aspect, the alarm type includes at least one of the following types: a type of a fault subject, a type of a fault, a type of a fault level, and a type of network management.

With reference to the third aspect, in some implementations of the third aspect, the processing unit is specifically configured to determine a first parameter based on the alarm information. The processing unit is further specifically configured to perform the fault detection by using the first parameter, where the first parameter includes at least one of the following parameters: a detection periodicity and a quantity of detection and confirmation times.

With reference to the third aspect, in some implementations of the third aspect, the first parameter is used to accelerate the fault detection.

With reference to the third aspect, in some implementations of the third aspect, the obtaining unit is further configured to receive environment information from the control apparatus. The processing unit is specifically configured to determine the first parameter based on the alarm information and the environment information, where the environment information includes at least one of the following information: path quality information, power information, and loss information.

With reference to the third aspect, in some implementations of the third aspect, the obtaining unit is further configured to receive the first parameter from the control apparatus. The processing unit is further configured to perform the fault detection by using the first parameter.

With reference to the third aspect, in some implementations of the third aspect, the signal processing apparatus is a remote radio unit RU, and the control apparatus is a baseband unit BU. Alternatively, the signal processing apparatus is an RU, and the control apparatus is a baseband processing apparatus MPT. Alternatively, the signal processing apparatus is a baseband processing apparatus BBP, and the control apparatus is an MPT.

According to a fourth aspect, a control apparatus is provided. The control apparatus includes a transceiver unit and a processing unit. The processing unit is configured to generate alarm information, where the alarm information indicates that an alarm exists on a signal processing apparatus before initialization, and the alarm information is used by the signal processing apparatus to perform fault detection. The transceiver unit is configured to send the alarm information to the signal processing apparatus.

In this way, in this application, when the signal processing apparatus completes the initialization, the signal processing apparatus may obtain the alarm information, learn, based on the alarm information, that the alarm exists on the signal processing apparatus before the initialization, and perform the fault detection based on the alarm information, so that system maintenance efficiency is improved.

With reference to the fourth aspect, in some implementations of the fourth aspect, the transceiver unit is further configured to receive a request message from the signal processing apparatus, where the request message is used to request to obtain the alarm information.

With reference to the fourth aspect, in some implementations of the fourth aspect, the alarm information is used by the signal processing apparatus to accelerate the fault detection.

With reference to the fourth aspect, in some implementations of the fourth aspect, the alarm information indicates an alarm type, and the fault detection corresponds to the alarm type.

With reference to the fourth aspect, in some implementations of the fourth aspect, the alarm type includes at least one of the following types: a type of a fault subject, a type of a fault, a type of a fault level, and a type of network management.

With reference to the fourth aspect, in some implementations of the fourth aspect, the alarm information is further used to determine a first parameter, and the first parameter includes at least one of the following parameters: a detection periodicity and a quantity of detection and confirmation times.

With reference to the fourth aspect, in some implementations of the fourth aspect, the first parameter is used to accelerate the fault detection.

With reference to the fourth aspect, in some implementations of the fourth aspect, the transceiver unit is further configured to send environment information to the signal processing apparatus, where the environment information is used to determine the first parameter, and the environment information includes at least one of the following information: path quality information, power information, and loss information.

With reference to the fourth aspect, in some implementations of the fourth aspect, the transceiver unit is further configured to send the first parameter to the signal processing apparatus, where the first parameter is used to perform the fault detection.

With reference to the fourth aspect, in some implementations of the fourth aspect, the signal processing apparatus is a radio unit RU, and the control apparatus is a baseband unit BU. Alternatively, the signal processing apparatus is an RU, and the control apparatus is a baseband processing apparatus MPT. Alternatively, the signal processing apparatus is a baseband processing apparatus BBP, and the control apparatus is an MPT.

According to a fifth aspect, a signal processing apparatus is provided. The apparatus may include a processing unit and an obtaining unit. Optionally, the obtaining unit may alternatively be a transceiver unit, or may alternatively be a sending unit and a receiving unit.

The processing unit may be a processor, and the obtaining unit may be a transceiver. The apparatus may further include a storage unit, and the storage unit may be a memory. The storage unit is configured to store instructions. The processing unit executes the instructions stored in the storage unit, to enable the signal processing apparatus to perform any method in the first aspect. When the apparatus is a chip in the signal processing apparatus, the processing unit may be a processor. The obtaining unit may be an input/output interface, a pin, a circuit, or the like. The processing unit executes instructions stored in a storage unit, to enable the chip to perform the method in the first aspect. The storage unit is configured to store instructions. The storage unit may be a storage unit (for example, a register or a cache) in the chip, or may be a storage unit located outside the chip in the signal processing apparatus (for example, a read-only memory or a random access memory). According to a sixth aspect, a control apparatus is provided. The apparatus may include a processing unit, a sending unit, and a receiving unit. Optionally, the sending unit and the receiving unit may alternatively be a transceiver unit.

The processing unit may be a processor, and the sending unit and the receiving unit may be a transceiver. The apparatus may further include a storage unit, and the storage unit may be a memory. The storage unit is configured to store instructions. The processing unit executes the instructions stored in the storage unit, to enable the control apparatus to perform any method in the second aspect. When the apparatus is a chip in the control apparatus, the processing unit may be a processor. The sending unit and the receiving unit may be an input/output interface, a pin, a circuit, or the like. The processing unit executes instructions stored in a storage unit, to enable the chip to perform any method in the second aspect. The storage unit is configured to store instructions. The storage unit may be a storage unit (for example, a register or a cache) in the chip, or may be a storage unit located outside the chip in the control apparatus (for example, a read-only memory or a random access memory).

According to a seventh aspect, this application provides an apparatus, including a processor. The processor is coupled to a memory, and may be configured to execute instructions in the memory, to implement the method in the first aspect or any possible implementation of the first aspect, or implement the method in the second aspect or any possible implementation of the second aspect. The apparatus further includes the memory. The apparatus further includes a communication interface, and the processor is coupled to the communication interface.

In an implementation, the apparatus is a signal processing apparatus. When the apparatus is a signal processing apparatus, the communication interface may be a transceiver or an input/output interface.

In another implementation, the apparatus is a chip or a chip system configured in a signal processing apparatus. When the apparatus is a chip or a chip system configured in a signal processing apparatus, the communication interface may be an input/output interface.

In an implementation, the apparatus is a control apparatus. When the apparatus is a control apparatus, the communication interface may be a transceiver or an input/output interface.

In another implementation, the apparatus is a chip or a chip system configured in a control apparatus. When the apparatus is a chip or a chip system configured in a control apparatus, the communication interface may be an input/output interface.

The transceiver may be a transceiver circuit. The input/output interface may be an input/output circuit.

According to an eighth aspect, a computer-readable storage medium is provided. The computer-readable storage medium stores a computer program or instructions. When the computer program or instructions are executed, any method in the first aspect or the second aspect is implemented. According to a ninth aspect, a computer program product including instructions is provided. When the instructions are run, any method in the first aspect or the second aspect is implemented. According to a tenth aspect, a computer program is provided. The computer program includes code or instructions. When the code or instructions are run, the method in any one of the possible implementations of the first aspect or the second aspect is implemented.

According to an eleventh aspect, a chip system is provided. The chip system includes a processor, and may further include a memory, configured to implement at least one method described in the first aspect or the second aspect. The chip system may include a chip, or may include a chip and another discrete component.

According to a twelfth aspect, a communication system is provided. The system includes the apparatus according to the third aspect or the fourth aspect.

In some implementations, a signal processing apparatus is a radio unit RU, and a control apparatus is a baseband unit BU. Alternatively, a signal processing apparatus is an RU, and a control apparatus is a baseband processing apparatus MPT. Alternatively, a signal processing apparatus is a baseband processing apparatus BBP, and a control apparatus is an MPT.

### BRIEF DESCRIPTION OF DRAWINGS

FIG. 1 is a diagram of a structure of a communication system to which an embodiment of this application is applicable;
FIG. 2 is a diagram of structures of a plurality of networking systems to which an embodiment of this application is applicable;
FIG. 3 is a schematic flowchart of a fault detection method according to an embodiment of this application;
FIG. 4 is a diagram in which an alarm exists on a signal processing apparatus according to an embodiment of this application; and
FIG. 5 to FIG. 7 each are a diagram of a structure of a possible apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a 5th generation (5th generation, 5G) system, a new radio (new radio, NR) system, a 6th generation (6th generation, 6G) system, or a future communication system. A 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine-to-machine (machine-to-machine, M2M) communication system, an internet of things (Internet of things, IoT) communication system, a vehicle-to-everything (vehicle-to-everything, V2X) communication system, an unmanned aerial vehicle (unmanned aerial vehicle, UAV) communication system, or another communication system.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

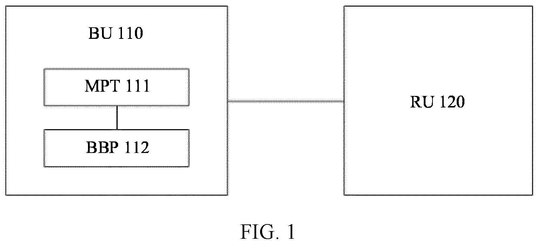

For ease of understanding of embodiments of this application, an application scenario of embodiments of this application is first described in detail with reference to FIG. 1.

FIG. 1 is a diagram of a structure of a communication system to which an embodiment of this application is applicable. An apparatus that may be involved in the communication system is first described.
1. Main control and transmission apparatus (for example, a main processing and transmission module, MPT) 111: The main control and transmission apparatus may also be referred to as a main control board. The MPT 111 may be deployed in a baseband unit (baseband unit, BU) 110, and may provide a signaling processing function or a resource management function for another board in the BU 110 or a board connected to the BU 110, for example, functions such as configuration management, device management, software management, performance monitoring, and alarming. The BU 110 may be a baseband unit (baseband unit, BBU), a central control unit (central unit, CU), a distributed control unit (distributed unit, DU), or another network element or communication apparatus having a capability of processing a baseband signal.
   In this embodiment of this application, the MPT 111 may be in an active state for a long period of time, receive and process an alarm reported by another board, and store the alarm of the another board in a storage unit of the MPT 111, to form an alarm record.
2. Baseband processing apparatus (for example, a baseband processing unit or a baseband processor, BBP) 112: The baseband processing apparatus may also be referred to as a baseband board. The BBP 112 may be deployed in the BU 110, and may implement a baseband signal processing function, for example, functions such as modulation, demodulation, encoding, and decoding of a baseband signal. It should be noted that a specific function implemented by the BBP 112 is related to a used communication protocol. This is not particularly limited in this application. In this embodiment of this application, the BBP 112 may independently perform power-off or sleep processing.

Refer to FIG. 1. It should be understood that, the MPT 111 and the BBP 112 are deployed in the same BU 110, and the MPT 111 and the BBP 112 may communicate with each other over an internal interface in the BU 110. In addition, the MPT 111 and the BBP 112 may be two hardware apparatuses that have independent hardware and that are in the BU 110, or may be two function modules deployed in a same hardware apparatus. 3. Radio unit (radio unit, RU) 130: The radio unit may also be referred to as a radio frequency board. The RU 130 may complete functions such as intermediate frequency processing, radio frequency processing, and duplexing of a signal. For example, the RU 130 may be a remote radio unit (remote radio unit, RRU), an active antenna unit (active antenna unit, AAU), or another network element or communication apparatus having a capability of processing an intermediate frequency signal, a radio frequency signal, or an intermediate radio frequency signal. In some communication systems, for example, in a communication system using an enhanced common public radio interface (enhanced common public radio interface, eCPRI), the RU 130 may further have some baseband processing functions. This is not particularly limited in this application.

In this embodiment of this application, the RU 130 may independently perform power-off or sleep processing.

A communication interface between the BU 110 and an RU 120 may be referred to as a fronthaul interface, and the fronthaul interface may be a common public radio interface (common public radio interface, CPRI), an eCPRI interface, or another interface that is defined in the future and that is used to connect the BU 110 and the RU 120.

In addition, when the MPT 111 and the BBP 112 are two independent hardware apparatuses, the MPT 111 and the BBP 112 each may have a fronthaul interface for communication with the RU 120. When the MPT 111 and the BBP 112 share one hardware apparatus, the MPT 111 and the BBP 112 may share a fronthaul interface for communication with the RU 120. This is not particularly limited in this application.

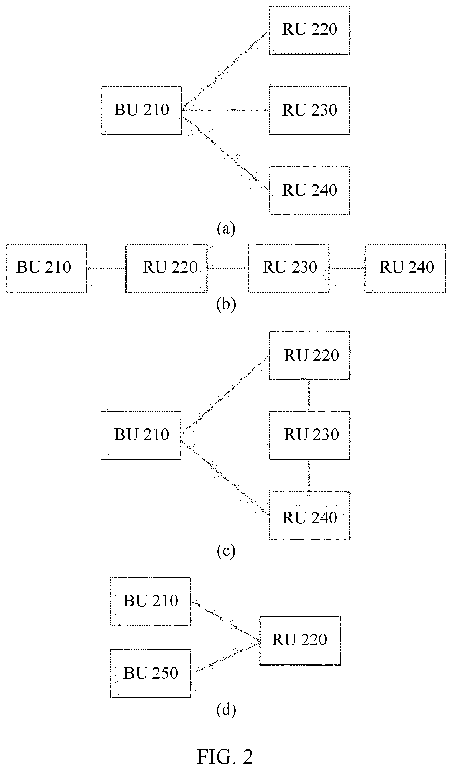

A distributed base station generally includes at least one BU and at least one RU. Each RU corresponds to one sector, and provides a radio access service of a single frequency band or a plurality of frequency bands. The following describes a networking manner between the BU and the RU with reference to FIG. 2.

FIG. 2 is a diagram of structures of a plurality of networking systems to which an embodiment of this application is applicable. The system includes a BU 210, an RU 220, an RU 230, and an RU 240. Refer to (a) in FIG. 2. The BU 210 is directly connected to the RU 220, the RU 230, and the RU 240, to form a directly-connected network. The BU directly communicates with the RU over a fronthaul interface. Refer to (b) in FIG. 2. The BU 210 is directly connected to the RU 220, the RU 220 is directly connected to the RU 230, and the RU 230 is directly connected to the RU 240, to form a chain network. The BU 210 directly communicates with the RU 220, and the BU 210 may communicate with the RU 230 and the RU 240 in a passthrough manner. Refer to (c) in FIG. 2. The BU 210 is directly connected to the RU 220, the RU 220 is directly connected to the RU 230, the RU 230 is directly connected to the RU 240, and the RU 240 is directly connected to the BU 210, to form a ring network. The BU 210 may directly communicate with the RU 220 and the RU 240, and the BU 210 may communicate with the RU 230 in a passthrough manner. Refer to (d) in FIG. 2. The system further includes a BU 250, and an RU 210 is directly connected to the BU 210 and the BU 250, to form a dual-star network. The RU 210 may directly communicate with the BU 210 and the BU 250 separately.

The foregoing describes only several networking systems to which embodiments of this application are applicable. Embodiments of this application may be further applicable to another networking system in which the RU and the BU can communicate with each other. This is not particularly limited in this application.

When a fault occurs on a communication module in a communication system, for example, the foregoing BBP or RU, the communication module may report an alarm for the fault. If an alarm still exists on the communication module when the communication module is powered off or in sleep, the alarm is cleared due to the power-off or sleep when the communication module is powered on or woken up again. However, a fault of the communication module during the power-off or sleep may not be recovered. After the alarm is cleared, no alarm exists on the communication module when the communication module is powered on or woken up again. In this case, it takes a long period of time to re-identify, through fault detection, the fault existing before the power-off or sleep. The communication system may mistakenly consider that no fault exists on the communication module. Consequently, system maintenance efficiency is low. For example, a standing wave alarm exists on a radio frequency module of a base station when the radio frequency module is in sleep. After the radio frequency module is woken up again, the standing wave alarm on the radio frequency module does not exist. The base station mistakenly considers that no fault exists on the radio frequency module, and cannot rectify a fault in time.

Therefore, a fault detection method, a signal processing apparatus, and a control apparatus are urgently needed to improve system maintenance efficiency.

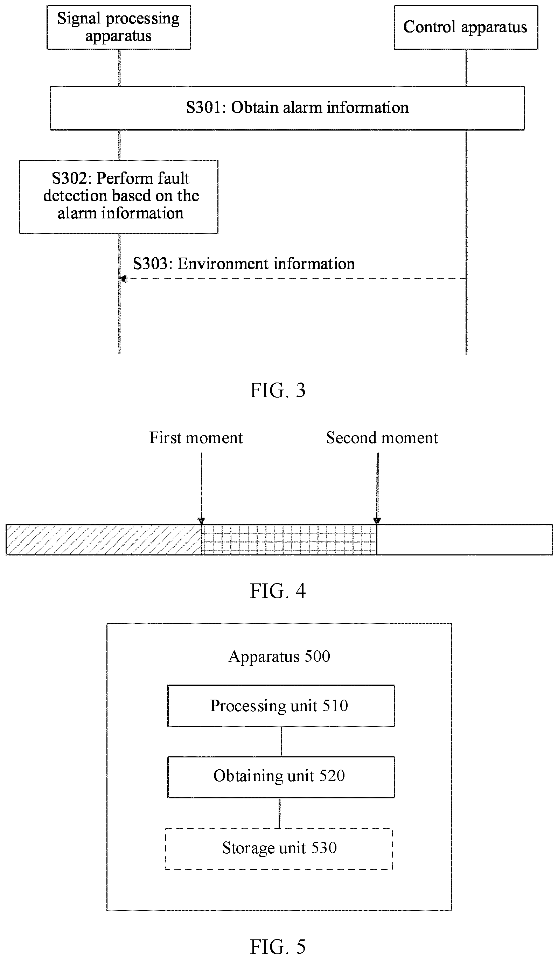

FIG. 3 is a schematic flowchart of a fault detection method 300 according to an embodiment of this application.

S301: A signal processing apparatus obtains alarm information after initialization of the signal processing apparatus.

The alarm information indicates that an alarm exists on the signal processing apparatus before the initialization.

The signal processing apparatus may be the BBP or the RU shown in FIG. 1. For descriptions of a function of the signal processing apparatus, refer to the descriptions of the BBP and the RU.

"After initialization of the signal processing apparatus", "when the signal processing apparatus completes the initialization", or "when the signal processing apparatus is restarted after the initialization" may include but is not limited to the following cases. 1. The signal processing apparatus enters a wake-up state from a sleep state, and "after entering the wake-up state" indicates "after initialization" in this application. 2. The signal processing apparatus enters a power-on state from a power-off state, and "after entering the power-on state" indicates "after initialization" in this application. 3. The signal processing apparatus performs upgrade reset or abnormal reset, and "after the upgrade reset or abnormal reset" indicates "after initialization" in this application.

It should be noted that the initialization in this embodiment of this application may indicate initialization of all or some modules in the signal processing apparatus, or may indicate complete or partial initialization of a module in the signal processing apparatus. This is not particularly limited in this application.

That an alarm exists on the signal processing apparatus before the initialization may indicate that, before the initialization, the alarm exists before the alarm is cleared due to power-off, sleep, or reset. For example, the alarm exists when the signal processing apparatus enters sleep, the alarm exists when the signal processing apparatus is powered off, or the alarm exists before the signal processing apparatus is reset. For clarity, a moment at which the alarm exists on the signal processing apparatus is described with reference to FIG. 4. Refer to FIG. 4. A first moment is a moment before the initialization, and a second moment is a moment at which the initialization is completed. At the first moment, the alarm exists on the signal processing apparatus, and the signal processing apparatus obtains the alarm information at the second moment. A sleep and wake-up scenario is used as an example. The signal processing apparatus enters sleep at the first moment, and is woken up at the second moment. The alarm exists before the first moment, and the signal processing apparatus stays in sleep between the first moment and the second moment. The signal processing apparatus obtains the alarm information at the second moment or after the second moment (namely, after the initialization), and determines, based on the alarm information, that the alarm exists on the signal processing apparatus at the first moment.

Optionally, the alarm information is a field indicating that the alarm exists on the signal processing apparatus before the initialization.

Optionally, the alarm information indicates an alarm type.

For example, the alarm type includes at least one of the following types: a type of a fault subject, a type of a fault, a type of a fault level, and a type of network management.

It should be understood that the alarm information may indicate alarm types of all alarms of the signal processing apparatus, or may indicate only an alarm type of a single alarm of the signal processing apparatus before the initialization. This is not particularly limited in this application. The type of the fault subject may indicate that a fault occurs on a module in the signal processing apparatus, for example, an optical module, an interface module, or a power module. For example, the alarm information may indicate the fault subject by indicating a location (for example, a board on which the fault subject is located) of the fault subject.

The type of the fault may indicate content of a specific fault, for example, indicate that a standing wave fault, an over-temperature fault, an overload fault, an abnormality fault, or the like occurs. For example, the alarm information may indicate a standing wave value, and the signal processing apparatus may determine, based on whether the standing wave value exceeds a preset threshold, whether the standing wave fault exists. Alternatively, the alarm information may indicate an alarm identifier, and the signal processing apparatus determines the content of the fault based on a correspondence between the alarm identifier and the type of the fault.

The type of the fault level may indicate importance of the fault, for example, indicate whether the fault is a major fault or a minor fault. The type of the network management may indicate a network management system to which the fault belongs, for example, a relay system, a communication system, an environment system, a hardware system, or an allowable system.

In addition, the alarm type may further indicate a network element to which the alarm belongs, an applicable RAT, an introduced version, or the like. This is not particularly limited in this application.

The signal processing apparatus may obtain the alarm information in a plurality of manners. The following describes the plurality of manners separately.

### Manner 1:

A control apparatus generates the alarm information.

The signal processing apparatus receives the alarm information from the control apparatus.

The control apparatus may be the MPT shown in FIG. 1. For descriptions of a function of the control apparatus, refer to the descriptions of the MPT.

The control apparatus may store the alarm existing before the initialization of the signal processing apparatus managed by the control apparatus, and generate the alarm information based on the stored alarm.

The control apparatus may store all alarms of the signal processing apparatus, or may store only the alarm existing before the initialization of the signal processing apparatus. For example, in the sleep and wake-up scenario, the signal processing apparatus may be set to sleep at the first moment, and the control apparatus may determine, at the first moment, whether the alarm exists on the signal processing apparatus. If the alarm exists on the signal processing apparatus, the control apparatus stores the alarm, or stores a field indicating that the alarm exists on the signal processing apparatus before the initialization.

When the signal processing apparatus is the BBP, the control apparatus may send the alarm information to the signal processing apparatus over an electrical interface. When the signal processing apparatus is the RRU, based on the different networking manners in FIG. 2, the control apparatus may directly send the alarm information to the signal processing apparatus over a fronthaul interface, or send the alarm information to the signal processing apparatus in a passthrough manner.

In this way, in Manner 1, when the signal processing apparatus completes the initialization, the control apparatus may actively send the alarm information to the corresponding signal processing apparatus.

### Manner 2:

The signal processing apparatus sends a request message to a control apparatus, where the request message is used to request to obtain the alarm information.

The control apparatus sends the alarm information to the signal processing apparatus based on the request message.

Descriptions about the control apparatus and communication between the control apparatus and the signal processing apparatus are similar to those in Manner 1. For brevity, details are not described herein again.

In this way, in Manner 2, when completing the initialization, the signal processing apparatus may send the request message to the control apparatus, and the control apparatus sends the alarm information to the signal processing apparatus in response to the request message.

### Manner 3:

The signal processing apparatus stores the alarm existing on the signal processing apparatus before the initialization.

The signal processing apparatus determines the alarm information based on the alarm existing before the initialization.

The signal processing apparatus may store all alarms of the signal processing apparatus, or may store only the alarm existing before the initialization. For example, in the sleep and wake-up scenario, the signal processing apparatus may be set to sleep at the first moment, and the signal processing apparatus may determine, at the first moment, whether the alarm exists on the signal processing apparatus. If the alarm exists on the signal processing apparatus, the signal processing apparatus stores the alarm, or stores a field indicating that the alarm exists on the signal processing apparatus before the initialization.

In this way, in Manner 3, the signal processing apparatus may store the alarm existing before the initialization, and determine the alarm information based on the alarm stored by the signal processing apparatus.

S302: The signal processing apparatus performs fault detection based on the alarm information. After obtaining the alarm information, the signal processing apparatus may learn that a fault may exist on the signal processing apparatus and has not been processed, so that the signal processing apparatus may perform the fault detection based on the alarm information.

When the alarm information indicates the alarm type, the fault detection may correspond to the alarm type.

By way of example, and not limitation, if the alarm information indicates the type of the fault subject, the signal processing apparatus may detect only the indicated fault subject. For another example, if the alarm information indicates the type of the fault, the signal processing apparatus may detect only the fault. For another example, if the alarm information indicates the type of the fault level, the signal processing apparatus may perform detection by using different policies based on different fault levels.

Optionally, the signal processing apparatus accelerates the fault detection based on the alarm information.

For example, the signal processing apparatus is preconfigured to perform first fault detection again when the initialization is completed. When obtaining the alarm information, the signal processing apparatus may select, based on the alarm information, a manner faster than the first fault detection to perform the fault detection.

Optionally, the signal processing apparatus sets a working status of the signal processing apparatus to an abnormal state based on the alarm information.

The abnormal state may indicate that a fault exists on the signal processing apparatus. For example, a working status of a signal processing apparatus includes a normal state and an abnormal state. It is specified that a signal processing apparatus in the normal state does not need to perform fault detection, and a signal processing apparatus in the abnormal state needs to perform an abnormal state. Alternatively, it is specified that a signal processing apparatus in the normal state needs to perform fault detection, and a signal processing apparatus in the abnormal state needs to accelerate fault detection. In this way, when obtaining the alarm information, the signal processing apparatus may directly set the working status to the abnormal state, to avoid a case in which the signal processing apparatus mistakenly considers, after the initialization, that no fault exists on the signal processing apparatus.

The following describes a manner in which the signal processing apparatus performs the fault detection based on the alarm information.

### Manner a:

The signal processing apparatus determines a first parameter based on the alarm information.

The signal processing apparatus performs the fault detection by using the first parameter.

The first parameter may include at least one of the following parameters: a detection periodicity and a quantity of detection and confirmation times.

The detection periodicity may be a periodicity for performing fault detection for a plurality of times, and the quantity of detection and confirmation times may be a quantity of times of performing fault detection for a plurality of times. For example, in some scenarios, the signal processing apparatus is set to perform fault detection for a plurality of times, and determine, based on results of the plurality of times of fault detection, whether a fault exists or a specific fault that exists. In this case, the signal processing apparatus may determine the detection periodicity and/or the quantity of detection and confirmation times based on the alarm information.

When the alarm information indicates the alarm type, the first parameter may correspond to the alarm type.

For example, if the alarm information indicates that the type of the fault level is a major fault, the signal processing apparatus may determine a short detection periodicity or a small quantity of detection and confirmation times, so that the fault can be rectified in time. In other words, the signal processing apparatus may determine different first parameters based on different alarm types, to perform the fault detection.

Optionally, the first parameter is used to accelerate the fault detection. Alternatively, the first parameter is used to shorten the detection periodicity, and/or reduce the quantity of detection and confirmation times.

For example, it is preconfigured that the signal processing apparatus needs to perform first fault detection by using a preconfigured parameter when the initialization is completed. When obtaining the alarm information, the signal processing apparatus may determine the first parameter based on the alarm information, for example, a detection periodicity shorter than the preconfigured parameter and/or a quantity of confirmation times less than the preconfigured parameter. Therefore, a speed of the fault detection performed by using the first parameter is faster than that of the first fault detection performed by using the preconfigured parameter. In addition, in this case, the first parameter may be dynamically selected by the signal processing apparatus based on the alarm information, or may be a parameter in a set of parameters that can implement fast detection and that is in a plurality of sets of parameters preconfigured in the signal processing apparatus. The signal processing apparatus may directly select the parameter based on the alarm information to perform the fault detection.

Optionally, in Manner a, step S303 may be further performed before step S302 in the method 300. S303: The signal processing apparatus receives environment information from the control apparatus.

The environment information is used to determine the first parameter used for the fault detection. The signal processing apparatus determines the first parameter based on the alarm information and the environment information.

The environment information may include at least one of the following information: path quality information, power information, and loss information. It should be understood that in this application, the environment information may further include other parameters that can assist the signal processing apparatus in performing the fault detection, such as, temperature information and humidity information.

The path quality information may indicate information such as a jitter, a packet loss rate, a bit error rate, and bandwidth of a path used by the signal processing apparatus to receive and send information. The power information may indicate information such as power of receiving and sending information by the signal processing apparatus. The loss information may indicate information such as a loss of an optical path of the signal processing apparatus. In this way, the signal processing apparatus may determine the first parameter based on the environment information. For example, when the environment information indicates that quality of a current path is poor, the signal processing apparatus may select a faster manner to perform the fault detection.

In this way, in Manner a, the signal processing apparatus may determine the first parameter for the fault detection.

### Manner b:

The control apparatus determines a first parameter based on the alarm information.

The signal processing apparatus receives the first parameter from the control apparatus.

The signal processing apparatus performs the fault detection by using the first parameter.

It should be understood that when the signal processing apparatus receives the alarm information from the control apparatus in Manner 1, the signal processing apparatus may also receive the first parameter from the control apparatus in Manner b.

A manner in which the control apparatus determines the first parameter is similar to the manner in which the signal processing apparatus determines the first parameter described in Manner a. For brevity, details are not described herein again.

In this way, in Manner b, the control apparatus may determine the first parameter used for the fault detection, and send the first parameter to the signal processing apparatus for the fault detection.

In this way, in this application, when the signal processing apparatus completes the initialization, the signal processing apparatus may obtain the alarm information, learn, based on the alarm information, that the alarm exists on the signal processing apparatus before the initialization, and perform the fault detection based on the alarm information, so that system maintenance efficiency is improved.

FIG. 5 to FIG. 7 each are a diagram of a structure of a possible apparatus according to an embodiment of this application. These control apparatuses may be configured to implement functions of the signal processing apparatus and the control apparatus in the foregoing method embodiments, and therefore can also achieve beneficial effects of the foregoing method embodiments. In embodiments of this application, the apparatuses may be the signal processing apparatus and the control apparatus, or may be modules (for example, chips) used in the signal processing apparatus and the control apparatus.

As shown in FIG. 5, an apparatus 500 includes a processing unit 510 and an obtaining unit 520. The apparatus 500 is configured to implement a function of the signal processing apparatus in the method embodiment shown in FIG. 2. Alternatively, the apparatus 500 may include a module configured to implement any function or operation of the signal processing apparatus in the method embodiment shown in FIG. 3. The module may be completely or partially implemented by using software, hardware, firmware, or any combination thereof.

When the apparatus 500 is configured to implement a function of the signal processing apparatus in the method embodiment shown in FIG. 3, the obtaining unit 520 is configured to obtain alarm information after initialization, where the alarm information indicates that an alarm exists on the signal processing apparatus before the initialization. The processing unit 510 is configured to perform fault detection based on the alarm information.

Optionally, the apparatus 500 may further include a storage unit 530, where the storage unit 530 is configured to store the alarm existing on the signal processing apparatus before the initialization. The obtaining unit 520 is specifically configured to determine the alarm information based on the alarm existing before the initialization.

In this way, in this application, after the initialization of the signal processing apparatus, the signal processing apparatus may obtain the alarm information, learn, based on the alarm information, that the alarm exists on the signal processing apparatus before the initialization, and perform the fault detection based on the alarm information, so that system maintenance efficiency is improved. For more detailed descriptions of the processing unit 510, the obtaining unit 520, and the storage unit 530, directly refer to the related descriptions in the method embodiment shown in FIG. 3. Details are not described herein again.

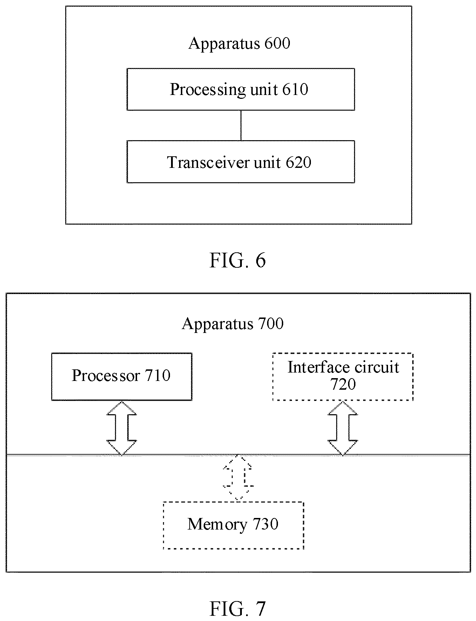

As shown in FIG. 6, an apparatus 600 includes a processing unit 610 and a transceiver unit 620. The apparatus 600 is configured to implement a function of the control apparatus in the method embodiment shown in FIG. 2. Alternatively, the apparatus 600 may include a module configured to implement any function or operation of the control apparatus in the method embodiment shown in FIG. 3. The module may be completely or partially implemented by using software, hardware, firmware, or any combination thereof.

When the apparatus 600 is configured to implement a function of the control apparatus in the method embodiment shown in FIG. 3, the processing unit 610 is configured to generate alarm information, where the alarm information indicates that an alarm exists on a signal processing apparatus before initialization, and the alarm information is used by the signal processing apparatus to perform fault detection. The transceiver unit 620 is configured to send the alarm information to the signal processing apparatus.

In this way, in this application, after the initialization of the signal processing apparatus, the signal processing apparatus may obtain the alarm information, learn, based on the alarm information, that the alarm exists on the signal processing apparatus before the initialization, and perform the fault detection based on the alarm information, so that system maintenance efficiency is improved. For more detailed descriptions of the processing unit 610 and the transceiver unit 620, directly refer to the related descriptions in the method embodiment shown in FIG. 3. Details are not described herein again.

As shown in FIG. 7, an apparatus 700 includes a processor 710, and optionally further includes an interface circuit 720. The processor 710 and the interface circuit 720 are coupled to each other. It may be understood that the interface circuit 720 may be a transceiver or an input/output interface. Optionally, the apparatus 700 may further include a memory 730, configured to store instructions executed by the processor 710, input data needed by the processor 710 to run the instructions, or data generated after the processor 710 runs the instructions.

When the apparatus 700 is configured to implement a function of the signal processing apparatus in the method embodiment in FIG. 3, the processor 710 is configured to implement a function of the processing unit 510, and the interface circuit 720 is configured to implement a function of the obtaining unit 520. Alternatively, the processor 710 is configured to implement functions of the processing unit 510 and the obtaining unit 520.

When the apparatus 700 is configured to implement a function of the control apparatus in the method embodiment in FIG. 3, the processor 710 is configured to implement a function of the processing unit 610, and the interface circuit 720 is configured to implement a function of the transceiver unit 620.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer programs or instructions. When the computer programs or instructions are loaded and executed on a computer, all or a part of the procedures or functions according to embodiments of this application are executed. The computer may be a general-purpose computer, a dedicated computer, a computer network, a network device, a terminal device, or another programmable apparatus. The computer programs or instructions may be stored in a computer-readable storage medium, or transmission of the computer programs or instructions may be performed through the computer-readable storage medium. The computer-readable storage medium may be any usable medium accessible by a computer, or may be a data storage device such as a server integrating one or more usable media. The usable medium may be a magnetic medium, for example, a floppy disk, a hard disk, or a magnetic tape; may be an optical medium, for example, a DVD; or may be a semiconductor medium, for example, a solid state disk (solid state disk, SSD).

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, numbers "first", "second", and the like are merely used to distinguish between different objects, for example, to distinguish between different network devices, and constitute no limitation on the scope of embodiments of this application. Embodiments of this application are not limited thereto.

It should be further understood that, in this application, both "when" and "if" mean that a network element performs corresponding processing in an objective situation, and are not intended to limit time. The terms do not mean that the network element is required to have a determining action during implementation, and do not mean any other limitation.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A fault detection method, wherein the method comprises:
obtaining, by a signal processing apparatus, alarm information after initialization, wherein the alarm information indicates that an alarm exists on the signal processing apparatus before the initialization; and
performing, by the signal processing apparatus, fault detection based on the alarm information.

2. The method according to claim 1, wherein the obtaining, by a signal processing apparatus, alarm information comprises:
receiving, by the signal processing apparatus, the alarm information from a control apparatus.

3. The method according to claim 2, wherein the method further comprises:
sending, by the signal processing apparatus, a request message to the control apparatus, wherein the request message is used to request to obtain the alarm information.

4. The method according to claim 1, wherein the method further comprises:
storing, by the signal processing apparatus, the alarm existing on the signal processing apparatus before the initialization; and
determining, by the signal processing apparatus, the alarm information based on the alarm existing before the initialization.

5. The method according to any one of claims 1 to 4, wherein the performing, by the signal processing apparatus, fault detection based on the alarm information comprises:
accelerating, by the signal processing apparatus, the fault detection based on the alarm information.

6. The method according to any one of claims 1 to 5, wherein the alarm information indicates an alarm type, and the fault detection corresponds to the alarm type.

7. The method according to claim 6, wherein the alarm type comprises at least one of the following types: a type of a fault subject, a type of a fault, a type of a fault level, and a type of network management.

8. The method according to any one of claims 1 to 7, wherein the performing, by the signal processing apparatus, fault detection based on the alarm information comprises:
determining, by the signal processing apparatus, a first parameter based on the alarm information; and
performing, by the signal processing apparatus, the fault detection by using the first parameter, wherein
the first parameter comprises at least one of the following parameters: a detection periodicity and a quantity of detection and confirmation times.

9. The method according to claim 8, wherein the first parameter is used to accelerate the fault detection.

10. The method according to claim 8 or 9, wherein the method further comprises:
receiving, by the signal processing apparatus, environment information from the control apparatus; and
the determining, by the signal processing apparatus, a first parameter based on the alarm information comprises:
determining, by the signal processing apparatus, the first parameter based on the alarm information and the environment information, wherein
the environment information comprises at least one of the following information: path quality information, power information, and loss information.

11. A fault detection method, wherein the method comprises:
generating, by a control apparatus, alarm information, wherein the alarm information indicates that an alarm exists on a signal processing apparatus before initialization, and the alarm information is used by the signal processing apparatus to perform fault detection; and
sending, by the control apparatus, the alarm information to the signal processing apparatus.

12. The method according to claim 11, wherein the method further comprises:
receiving, by the control apparatus, a request message from the signal processing apparatus, wherein the request message is used to request to obtain the alarm information.

13. The method according to claim 11 or 12, wherein the alarm information is used by the signal processing apparatus to accelerate the fault detection.

14. The method according to any one of claims 11 to 13, wherein the alarm information indicates an alarm type, and the fault detection corresponds to the alarm type.

15. The method according to claim 14, wherein the alarm type comprises at least one of the following types: a type of a fault subject, a type of a fault, a type of a fault level, and a type of network management.

16. The method according to any one of claims 11 to 15, wherein the alarm information is further used to determine a first parameter, and the first parameter comprises at least one of the following parameters: a detection periodicity and a quantity of detection and confirmation times.

17. The method according to claim 16, wherein the first parameter is used to accelerate the fault detection.

18. The method according to claim 15 or 16, wherein the method further comprises:
sending, by the control apparatus, environment information to the signal processing apparatus, wherein the environment information is used to determine the first parameter, and the environment information comprises at least one of the following information: path quality information, power information, and loss information.

19. A signal processing apparatus, comprising at least one unit configured to perform the method according to any one of claims 1 to 10.

20. A communication apparatus, comprising at least one unit configured to perform the method according to any one of claims 11 to 18.

21. A communication apparatus, comprising a processor, wherein the processor is coupled to a memory, the memory is configured to store a computer program or instructions, and the processor is configured to execute the computer program or instructions to implement the method according to any one of claims 1 to 10 or claims 11 to 18.

22. A fault detection system, comprising the signal processing apparatus according to claim 19 and a control apparatus according to claim 20.
